# EUROPÄISCHE PATENTSCHRIFT

(11) **EP 3 207 193 B1**
(45) Veröffentlichungstag und Bekanntmachung des Hinweises auf die Patenterteilung: **12.12.2018**
(21) Anmeldenummer: 15778970.2
(22) Anmeldetag: 13.10.2015
(51) Int. Cl.: E04G 21/04, B66C 23/66, E02F 3/38

(54) **MASTARM UND BETONVERTEILERMAST**
BOOM ARM AND CONCRETE-DISTRIBUTING BOOM
BRAS DE MÂT ET MÂT DISTRIBUTEUR DE BÉTON

(30) Priorität: 14.10.2014 DE 102014220754
(43) Veröffentlichungstag der Anmeldung: 23.08.2017
(73) Patentinhaber: Putzmeister Engineering GmbH, 72631 Aichtal (DE)
(72) Erfinder: HAHN, Christian, 71101 Schönlach (DE)
(74) Vertreter: Pfiz, Thomas
(86) Internationale Anmeldenummer: PCT/EP2015/073693
(87) Internationale Veröffentlichungsnummer: WO 2016/059061

(56) Entgegenhaltungen:
- WO-A1-2013/045568
- CN-U- 202 706 568
- CN-U- 202 882 436
- CN-Y- 201 245 983
- DE-A1- 3 200 829
- DE-A1-102011 078 780
- JP-U- S6 294 140

## Beschreibung

Die Erfindung betrifft einen Mastarm für einen Betonverteilermast mit einem zumindest abschnittsweise aus zwei Gurten und zwei die Gurte seitlich verbindenden Stegen gebildeten, langgestreckten Kastenprofilträger, der an einem Endabschnitt zwei in Armlängsrichtung gesehen im Abstand voneinander befindliche Gelenkstellen zum Anlenken eines hydraulischen Schwenkantriebs aufweist, und einer Dichtschottanordnung zur Abdichtung eines Hohlraumbereichs des Kastenprofilträgers zumindest im Bereich von Gurtöffnungen an den Gelenkstellen. Die Erfindung betrifft weiter einen Betonverteilermast mit mindestens einem solchen Mastarm.

An Mastarmen von Betonverteilermasten wird im Gelenksbereich zum einen der jeweilige Schwenkantrieb angeschlossen, zum anderen müssen die Arme untereinander verbunden werden. Beides erfordert fallweise das Öffnen der Kastenprofilträger. Um zu verhindern, dass Wasser in den Hohlraumbereich des Arms eindringt, müssen die Öffnungen wieder verschlossen werden. In der Praxis werden bisher voneinander getrennte Dichtschotte für jeden Öffnungsbereich verbaut. Unter dem Antriebszylinder entsteht so eine Wanne, in der sich Wasser bzw. Eis und Schmutz sammeln können. Diese Ansammlungen führen zu Zusatzbelastungen und können eine Schädigung der Tragstruktur bewirken. Zur Abhilfe wird bei konventioneller Bauweise ein Ablauf vorgesehen, indem ein Loch in das Steg- oder Gurtblech eingebracht und ein Rohr eingeschweißt wird. Dies wiederum bewirkt eine hohe Kerbwirkung in den Bauteilen und führt in der Regel zu Zusatzgewicht.

Die WO 2013/045568 A1 offenbart einen Mastarm für einen Betonverteilermast gemäß dem einleitenden Teil des Anspruchs 1.

Ausgehend hiervon liegt der Erfindung die Aufgabe zugrunde, die im Stand der Technik bekannten Erzeugnisse weiter zu verbessern und eine einfach herstellbare und auch gegen Wasser- und Schmutzzutritt robuste Konstruktion eines Mastarms für einen Betonverteilermast zu schaffen.

Zur Lösung dieser Aufgabe wird die in dem unabhängigen Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, ein über den Verlauf des gesamten zu dichtenden Bereichs angepasstes Einschweißschott in das Armprofil einzuschweißen. Dementsprechend wird erfindungsgemäß vorgeschlagen, dass die Dichtschottanordnung ein den Hohlraumbereich zwischen den Gelenkstellen in Armlängsrichtung durchgehend bzw. vollständig überspannendes und seitlich mit den Stegen verbundenes einzelnes Schottblech aufweist. Es versteht sich, dass ein solches einzelnes Schottblech auch durch mehrere Segmente bzw. zusammengesetzte Blechabschnitte gebildet werden kann, solange eine durchgehende, nach innen dichte Anordnung gewährleistet ist. Dadurch werden gegenüber konventionellen Lösungen Schweißnähte eingespart, was den Herstellungsaufwand und die Anzahl von Anschweißstellen mit ungünstiger Kerbwirkung reduziert. Ansammlungen von Wasser und Schmutz unter dem Schwenkantrieb können über das Mastarmende an der Anbindung des nächsten Armes abgeleitet werden. Die erfindungsgemäße Lösung kann sowohl an Armen mit innen- als auch mit außenliegenden Gurten verwendet werden. Ein besonderer Vorteil ergibt sich aber bei Verwendung in Armen mit außenliegenden, d.h. die Stege randseitig übergreifenden Gurten, da hier ein Gurtsprung, d.h. ein Wechsel von außen- auf innenliegenden Gurt vermieden werden kann. Dadurch wird das höhere resultierende Flächenträgheitsmoment von außenliegenden Gurten auch im Bereich der Gelenkverbindung der Arme nutzbar. Außerdem wird ein aus einem Gurtsprung resultierender Kerbfall vermieden.

Erfindungsgemäß ist vorgesehen, dass die im Bereich des Mastarmendes befindliche erste Gelenkstelle innerhalb des Hohlraumbereichs angeordnet ist und durch das Schottblech gegenüber einer Gurtöffnung am Mastarmende abgedeckt ist. Dadurch ist auch eine selbständige Entleerung von Wasser etc. auf einfache Weise möglich.

Vorteilhafterweise ist die von dem Mastarmende entfernte zweite Gelenkstelle über eine Gurtöffnung zugänglich und durch das Schottblech von dem abzudichtenden Hohlraumbereich getrennt, so dass ein Freiraum für die Anbringung eines Hydraulikzylinders geschaffen wird und zugleich der Hohlraumbereich des Kastenprofilträgers gegen Wasserzutritt abgedichtet bleibt. Eine weitere Verbesserung in dieser Hinsicht lässt sich dadurch erreichen, dass das streifenförmig langgestreckte und entsprechend dem gewünschten Verlauf in Längsrichtung gebogene Schottblech an seinen Längsseitenrändern stoffschlüssig vorzugsweise über Schweißnähte mit den einander zugewandten Innenseiten der Stege verbunden wird. Günstig ist es auch, wenn das Schottblech an mindestens einer seiner Stirnkanten an der Innenseite eines Gurts endet.

Um Wasseransammlungen möglichst von vornherein zu vermeiden, ist es von Vorteil, wenn das Schottblech den Boden einer durch die Stege seitlich begrenzten Wanne bildet, die über eine Gurtöffnung am Mastarmende entleerbar ist.

Eine weitere konstruktiv vorteilhafte Ausgestaltung sieht vor, dass die Gurte in Armlängsrichtung durchgängig auf den Längskanten der Stege außenliegend aufliegen.

Um die Verbindung der Kastenkonstruktion in einem gut zugänglichen Bereich zu bewerkstelligen, ist es vorteilhaft, wenn die Gurte an ihren einander zugewandten Innenseiten mit den voneinander abgewandten Außenseiten der Stege über Längsschweißnähte verbunden sind.

Für die Schaffung gelenkiger Verbindungen ist es günstig, wenn die Gelenkstellen in Bohrungen der Stege eingesetzte Lagerbuchsen aufweisen.

Günstig ist es auch, wenn der Kastenprofilträger an dem insbesondere abgekröpften Endabschnitt eine Knickachse zur gelenkigen Verbindung eines weiteren Mastarms aufweist, und wenn das Schottblech zwischen der Knickachse und der benachbarten Gelenkstelle für den Schwenkantrieb verläuft.

Um die Gurtbleche nicht zu unterbrechen, ist es vorteilhaft, wenn die Gurtöffnungen durch umlaufend begrenzte Ausschnitte in den Gurten gebildet sind.

Gegenstand der Erfindung ist auch ein Betonverteilermast insbesondere für eine Autobetonpumpe mit mehreren gelenkig miteinander verbundenen Mastarmen zur Führung einer Betonförderleitung, wobei mindestens ein Mastarm mit den vorstehend beschriebenen Vorteilen erfindungsgemäß ausgebildet ist.

Im Folgenden wird die Erfindung anhand des in der Zeichnung schematisch dargestellten Ausführungsbeispiels näher erläutert. Es zeigen:
- Fig. 1: eine Autobetonpumpe mit einem entfaltbaren mehrarmigen Betonverteilermast in Seitenansicht;
- Fig. 2: einen Mastarm des Betonverteilermasts in perspektivischer Darstellung;
- Fig. 3: einen Endabschnitt des Mastarms in vergrößerter Ansicht der Fig. 2;
- Fig. 4: ein gelenkig verbundenes Mastarmpaar des Betonverteilermasts mit einem zugeordneten Schwenkantrieb in einem abgebrochenen zentralen Vertikalschnitt.

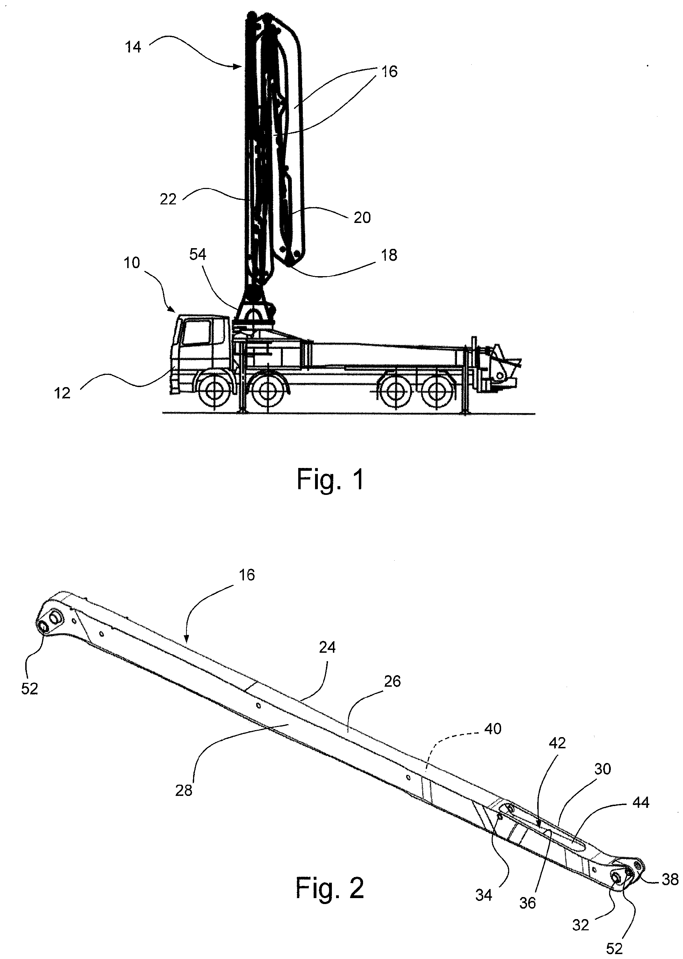

Die in Fig. 1 gezeigte Autobetonpumpe 10 umfasst ein Fahrzeug 122 und einen darauf transportierbaren Betonverteilermast 14 mit mehreren Mastarmen 16, die über Knickgelenke 18 miteinander verbunden sind und mittels hydraulischer Schwenkantriebe 20 an den Knickgelenken gegeneinander verschwenkbar sind, so dass eine entlang dem Mast geführte Betonförderleitung 22 mit ihrem Endschlauch in einem Arbeitsbereich variabel positionierbar ist.

Fig. 2 zeigt einen Mastarm 16 (beispielhaft den vierten Mastarm des Armpakets in Fig. 1), der zwischen seinen abgekröpften Enden als langgestreckter Kastenprofilträger 24 aus zwei Gurten 26 und zwei die Gurte 26 seitlich verbindenden Stegen 28 als Schweißkonstruktion im Querschnitt rechteckförmig zusammengesetzt ist.

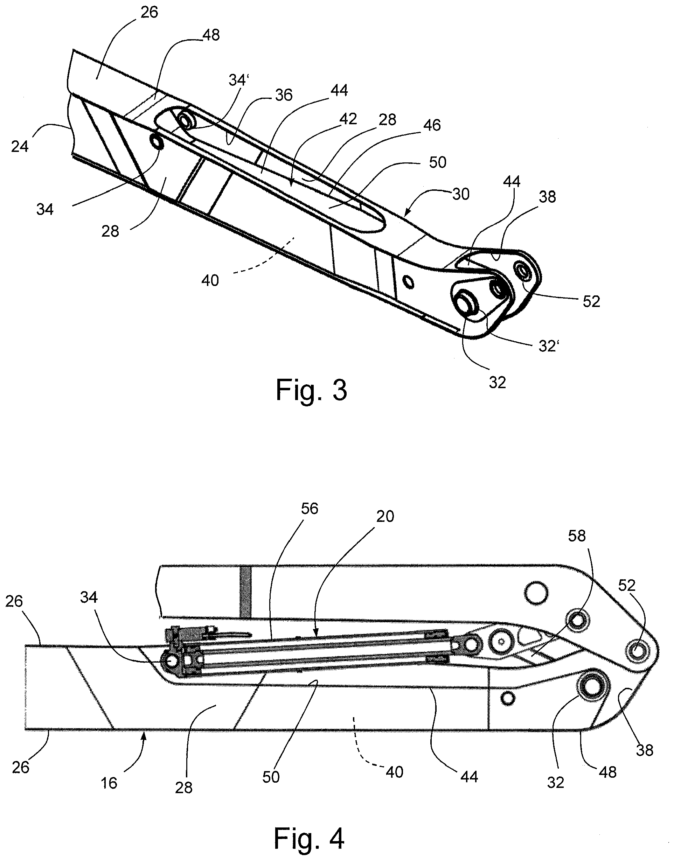

Wie auch aus Fig. 3 ersichtlich, weist der Mastarm 14 an einem Endabschnitt 30 zwei in Armlängsrichtung gesehen im Abstand voneinander befindliche Gelenkstellen 32, 34 für den Angriff des hydraulischen Schwenkantriebs 20 auf. Diese sind durch in Bohrungen der Stege 28 eingesetzte Lagerbuchsen 32',34' gebildet.

Um den Hohlraumbereich 40 des Kastenprofilträgers 24 auch an den Gurtöffnungen 36, 38 abzudichten, ist eine Dichtschottanordnung 42 vorgesehen. Diese besteht aus einem einzelnen Schottblech 44, welches sich von der näher am Mastarmende befindlichen ersten Gelenkstelle 32 bis zur weiter vom Mastarmende entfernten zweiten Gelenkstelle 34 durchgehend erstreckt und an seinen Längsseiten mit den Stegen 28 dicht verbunden ist. Wie auch aus dem Schnitt in der vertikalen Armmittelebene der Fig. 4 ersichtlich, ist die erste Gelenkstelle 32 somit zwischen den Stegen 28 innerhalb des Hohlraumbereichs 40 des Mastarms 16 angeordnet und durch das Schottblech 44 gegenüber der Gurtöffnung 38 am Mastarmende abgedeckt. Hingegen ist die zweite Gelenkstell 34 über die Gurtöffnung 36 für die Anbindung des Schwenkantriebs 20 zugänglich und durch das Schottblech 44 von dem abzudichtenden Hohlraumbereich 40 getrennt.

Das aus einem Flacheisenmaterial gebildete, streifenförmig langgestreckte Schottblech 44 ist an seinen Längsseitenrändern über Längsschweißnähte 46 mit den einander zugewandten Innenseiten der Stege 28 stoffschlüssig verbunden. An seinen Stirnkanten ist das Schottblech 44 an den Gurten 26 über Querschweißnähte 48 ebenfalls dicht angeschlossen. Auf diese Weise bildet das Schottblech 44 den Boden einer durch die Stege 28 seitlich begrenzten Wanne 50, die bei Wasserzutritt über die Gurtöffnung 38 am Mastarmende entleerbar ist.

In der Schweißkonstruktion des Mastarms 16 liegen die Gurte 26 durchgängig außen auf den Längskanten der Stege 28 auf, wobei die Schweißnähte längs der von dem Hohlraumbereich 40 abgewandten Außenränder der Stege 28 verlaufen. Die Gurtöffnungen 36, 38 sind dabei durch umlaufend begrenzte Ausschnitte in den Gurten 26 gebildet.

Der Mastarm 16 weist an seinen beiden abgekröpften gabelförmigen Enden jeweils eine Knickachse 52 zur gelenkigen Verbindung eines Mastarms auf. Nur der erste Mastarm ist an einem Ende mit einem Mastbock 54 auf dem Fahrzeug 12 verbunden, während der letzte (fünfte) Mastarm endseitig den Endschlauch der Betonförderleitung 22 trägt. Wie am besten aus Fig. 4 zu erstehen, greift der Schwenkantrieb 20 mit seinem Hydraulikzylinder 56 in die Wanne 50 ein, wo er bodenseitig an der zweiten Gelenkstelle 34 gelenkig angeschlossen ist, während das stangenseitige Ende über Umlenkhebel 58 außenseitig an den Gelenkbuchsen 32' der ersten Gelenkstelle 32 angelenkt ist.

## Patentansprüche

1. Mastarm für einen Betonverteilermast (14) mit einem zumindest abschnittsweise aus zwei Gurten (26) und zwei die Gurte seitlich verbindenden Stegen (28) gebildeten, langgestreckten Kastenprofilträger (24), der an einem Endabschnitt zwei in Armlängsrichtung gesehen im Abstand voneinander befindliche Gelenkstellen (32,34) zum Anlenken eines vorzugsweise hydraulischen Schwenkantriebs (20) aufweist, und einer Dichtschottanordnung (42) zur Abdichtung eines Hohlraumbereichs (40) des Kastenprofilträgers (24) zumindest im Bereich von Gurtöffnungen (36,38) an den Gelenkstellen (32,34), wobei die Dichtschottanordnung (42) ein den Hohlraumbereich (40) zwischen den Gelenkstellen (32,34) in Armlängsrichtung durchgehend überspannendes und seitlich mit den Stegen (28) verbundenes einzelnes Schottblech (44) aufweist, **dadurch gekennzeichnet, dass** die im Bereich des Mastarmendes befindliche erste Gelenkstelle (32) innerhalb des Hohlraumbereichs (40) angeordnet ist und durch das Schottblech (44) gegenüber einer der Gurtöffnungen (38) am Mastarmende abgedeckt ist.

2. Mastarm nach Anspruch 1, **dadurch gekennzeichnet, dass** die von dem Mastarmende entfernte zweite Gelenkstelle (34) über eine weitere der Gurtöffnungen (36) zugänglich ist und durch das Schottblech (44) von dem abzudichtenden Hohlraumbereich (40) getrennt ist.

3. Mastarm nach Anspruch 1 oder 2, **dadurch gekennzeichnet, dass** das Schottblech (44) bahnförmig langgestreckt ist und an seinen Längsseitenrändern stoffschlüssig vorzugsweise über Schweißnähte mit den einander zugewandten Innenseiten der Stege (28) verbunden ist.

4. Mastarm nach einem der Ansprüche 1 bis 3, **dadurch gekennzeichnet, dass** das Schottblech (44) an mindestens einer seiner Stirnkanten an der Innenseite eines Gurts (26) endet.

5. Mastarm nach einem der Ansprüche 1 bis 4, **dadurch gekennzeichnet, dass** das Schottblech (44) den Boden einer durch die Stege (28) seitlich begrenzten Wanne (50) bildet, die über die Gurtöffnung (38) am Mastarmende entleerbar ist.

6. Mastarm nach einem der Ansprüche 1 bis 5, **dadurch gekennzeichnet, dass** die Gurte (26) durchgängig außenliegend auf den Längskanten der Stege (28) aufliegen.

7. Mastarm nach einem der Ansprüche 1 bis 6, **dadurch gekennzeichnet, dass** die Gurte (26) an ihren einander zugewandten Innenseiten mit den voneinander abgewandten Außenseiten der Stege (28) über Längsschweißnähte verbunden sind.

8. Mastarm nach einem der Ansprüche 1 bis 7, **dadurch gekennzeichnet, dass** die Gelenkstellen (32,34) in Bohrungen der Stege eingesetzte Lagerbuchsen (32',34') aufweisen.

9. Mastarm nach einem der Ansprüche 1 bis 8, **dadurch gekennzeichnet, dass** der Kastenprofilträger (24) an dem insbesondere abgekröpften Endabschnitt eine Knickachse (52) zur gelenkigen Verbindung eines weiteren Mastarms aufweist, und dass das Schottblech (44) zwischen der Knickachse (52) und der dazu benachbarten Gelenkstelle (32) für den Schwenkantrieb (20) verläuft.

10. Mastarm nach einem der Ansprüche 1 bis 9, **dadurch gekennzeichnet, dass** die Gurtöffnungen (36,38) durch umlaufend begrenzte Ausschnitte in den Gurten (26) gebildet sind.

11. Betonverteilermast insbesondere für eine Autobetonpumpe (10) mit mehreren gelenkig miteinander verbundenen Mastarmen (16) zur Führung einer Betonförderleitung (22), wobei mindestens ein Mastarm nach einem der vorhergehenden Ansprüche ausgebildet ist.

## Claims

1. A boom arm for a concrete-distributing boom (14), having an elongate box-profile support (24) which is formed, at least sectionally, from two flanges (26) and two webs (28) connecting the flanges laterally and which, at an end portion, exhibits two points of articulation (32, 34) which are spaced apart from one another in the longitudinal direction of the arm and are intended for the articulation of a preferably hydraulic pivot drive (20), and having a sealing-partition arrangement (42) for sealing a cavity region (40) of the box-profile support (24), at least in the region of flange openings (36, 38) at the points of articulation (32, 34), wherein the sealing partition arrangement (42) has a single partition plate (44) which spans the cavity region (40) between the points of articulation (32, 34) continuously in the longitudinal direction of the arm and is connected laterally to the webs (28), **characterized in that** the first point of articulation (32) located in the region of the end of the boom arm is arranged within the cavity region (40) and is covered by the partition plate (44) in relation to one of the flange openings (38) at the end of the boom arm.

2. The boom arm as claimed in claim 1, **characterized in that** the second point of articulation (34) distal from the end of the boom arm is accessible via another of the flange openings (36) and separated from the cavity region (40) to be sealed by the partition plate (44).

3. The boom arm as claimed in claim 1 or 2, **characterized in that** the partition plate (44) is elongate web-shaped and connected on its longitudinal side edges in a substance-bonded manner preferably by means of welding seams to the mutually facing inner surfaces of the webs (28).

4. The boom arm as claimed in one of claims 1 to 3, **characterized in that** the partition plate (44) ends on at least one of its face edges at the inner surface of a flange (26).

5. The boom arm as claimed in one of claims 1 to 4, **characterized in that** the partition plate (44) forms the floor of a trough (50) delimited laterally by the webs (28), said trough being capable of being emptied via the flange opening (38) at the end of the boom arm.

6. The boom arm as claimed in one of claims 1 to 5, **characterized in that** the flanges (26) continuously bear against the longitudinal edges of the webs (28) externally.

7. The boom arm as claimed in one of claims 1 to 6, **characterized in that** the flanges (26) are connected at their mutually facing inner surfaces to the mutually averted outer surfaces of the webs (28) by means of longitudinal welding seams.

8. The boom arm as claimed in one of claims 1 to 7, **characterized in that** the points of articulation (32, 34) exhibit bearing bushes (32', 34') inserted in bores in the webs.

9. The boom arm as claimed in one of claims 1 to 8, **characterized in that** the box-profile support (24) exhibits at the particularly offset end portion a bending spindle (52) for the articulated connection of another boom arm and that the partition plate (44) runs between the bending spindle (52) and the point of articulation (32) adjacent thereto for the pivot drive (20).

10. The boom arm as claimed in one of claims 1 to 9, **characterized in that** the flange openings (36, 38) are formed by continuously delimited cutouts in the flanges (26).

11. A concrete-distributing boom, in particular for a truck-mounted concrete pump (10), with a plurality of boom arms (16) connected to one another in articulated fashion intended to control a concrete-conveying line (22), wherein at least one boom arm is configured according to one of the preceding claims.

## Revendications

1. Bras de mât pour un mât distributeur de béton (14) avec un support profilé de caisse (24) allongé et formé au moins par endroits par deux courroies (26) et deux plaques (28) reliant latéralement les courroies, lequel profilé présente, vu dans la direction longitudinale de bras au niveau d'une section d'extrémité, deux points d'articulation se trouvant à distance l'un de l'autre (32, 34) pour l'articulation d'un mécanisme d'entraînement pivotant (20) de préférence hydraulique, et un agencement à cloison étanche (42) pour rendre étanche une zone à espace creux (40) du support profilé de caisse (24) au moins dans la zone d'ouvertures de courroie (36, 38) au niveau des points d'articulation (32, 34), dans lequel l'agencement à cloison étanche (42) présente une tôle de cloison séparée (44) enjambant de manière continue la zone à espace creux (40) entre les points d'articulation (32, 34) dans la direction longitudinale de bras et reliée latéralement aux plaques (28), **caractérisé en ce que** le premier point d'articulation (32) se trouvant dans la zone de l'extrémité de bras de mât est disposé à l'intérieur de la zone à espace creux (40) et est recouvert par le biais de la tôle de cloison (44) par rapport à l'une des ouvertures de courroie (38) au niveau de l'extrémité de bras de mât.

2. Bras de mât selon la revendication 1, **caractérisé en ce que** le deuxième point d'articulation (34) éloigné de l'extrémité de bras de mât est accessible par l'intermédiaire d'une ouverture de courroie supplémentaire des ouvertures de courroie (36) et est séparé de la zone à espace creux (40) à rendre étanche par la tôle de cloison (44).

3. Bras de mât selon la revendication 1 ou 2, **caractérisé en ce que** la tôle de cloison (44) est allongée en forme de piste et est reliée au niveau de ses bords latéraux longitudinaux par complémentarité de matières de préférence par l'intermédiaire de joints de soudure aux faces internes des plaques (28) tournées l'une vers l'autre.

4. Bras de mât selon l'une des revendications 1 à 3, **caractérisé en ce que** la tôle de cloison (44) se termine au niveau d'au moins une de ses arêtes frontales au niveau de la face interne d'une courroie (26).

5. Bras de mât selon l'une des revendications 1 à 4, **caractérisé en ce que** la tôle de cloison (44) forme la partie inférieure d'un récipient (50) délimité latéralement par les plaques (28), lequel récipient peut être vidé par l'intermédiaire de l'ouverture de courroie (38) au niveau de l'extrémité de mât.

6. Bras de mât selon l'une des revendications 1 à 5, **caractérisé en ce que** les courroies (26) reposent en totalité à l'extérieur sur les arêtes longitudinales des plaques (28).

7. Bras de mât selon l'une des revendications 1 à 6, **caractérisé en ce que** les courroies (26) sont reliées au niveau de leurs faces internes tournées l'une vers l'autre aux faces externes des plaques (28) détournées l'une de l'autre par l'intermédiaire de joints de soudure longitudinaux.

8. Bras de mât selon l'une des revendications 1 à 7, **caractérisé en ce que** les points d'articulation (32, 34) présentent des coussinets (32', 34') installés dans des alésages des plaques.

9. Bras de mât selon l'une des revendications 1 à 8, **caractérisé en ce que** le support de profil de caisse (24) présente au niveau de la section d'extrémité en particulier coudée un axe de courbure (52) pour la liaison articulée d'un bras de mât supplémentaire, et **en ce que** la tôle de cloison (44) s'étend entre l'axe de courbure (52) et le point d'articulation (32) qui en est voisin pour le mécanisme d'entraînement pivotant (20).

10. Bras de mât selon l'une des revendications 1 à 9, **caractérisé en ce que** les ouvertures de courroie (36, 38) sont formées par des sections délimitées dans le sens périphérique dans les courroies (26).

11. Mât distributeur de béton en particulier pour une pompe à béton automotrice (10) avec plusieurs bras de mât (16) reliés les uns aux autres de manière articulée pour le guidage d'une conduite d'acheminement de béton (22), dans lequel au moins un bras de mât est réalisé selon l'une des revendications précédentes.
